# EUROPEAN PATENT APPLICATION

(11) **EP 2 330 353 A1**
(43) Date of publication of application: **08.06.2011**
(21) Application number: 09814506.3
(22) Date of filing: 09.09.2009
(51) Int. Cl.: F24C 1/00

(54) **HEATING COOKER**

(30) Priority: 19.09.2008 JP 2008240978
(71) Applicant: Sharp Kabushiki Kaisha, Osaka-shi, Osaka 545-8522 (JP)
(72) Inventor: TOMOMURA, Yoshinobu, Osaka 545-8522 (JP); TANAKA, Motoki, Osaka 545-8522 (JP)
(74) Representative: Treeby, Philip David William
(86) International application number: PCT/JP2009/065707
(87) International publication number: WO 2010/032661

(57) **Abstract**

In a process in which cooking is performed under a first heating condition under which superheated steam produced by a steam heater (4) is supplied to a heating chamber (2) to heat an object to be heated (7), when a steam detector unit detects that there is no steam produced in a water reservoir part (105), a control unit (5) ceases power supply to a water heater (103), performs switching to a second heating condition under which cooking is to be performed without supply of steam, and continues the cooking by the steam heater (4), without supply of steam.

## Description

### TECHNICAL FIELD

The present invention relates to a heating cooker.

### BACKGROUND ART

There has been a conventional heating cooker in which steam is supplied into a heating chamber when an object to be heated in the heating chamber is cooked by a heater (see JP 2007-303816 A (Patent Literature 1), for instance). In the heating cooker, the supply of steam into the heating chamber makes it possible to reduce burning of surfaces of the object to be heated and to attain uniform heating to inside of the object to be heated.

The heating cooker, however, has a problem in that exhaustion of water in middle of cooking by the heater with the supply of steam into the heating chamber may cause incomplete cooking with stoppage of the cooking or superheating of the object to be heated with continuation of the cooking, or the like. There is another problem in that replenishment with water by a user upon the exhaustion of water in middle of the cooking may cause a disorder in a cooking process and failure in appropriate cooking because a time lag is caused by consumption of much time for production of steam posterior to the replenishment with water.

### CITATION LIST

### PATENT LITERATURE

PTL1: JP 2007-303816 A

### SUMMARY OF INVENTION

### Technical Problem

An object of the invention is, therefore, to provide a heating cooker in which even if water is exhausted in middle of cooking, heating is continued under an optimal condition to thereby attain satisfactory cooking without supply of steam, without requiring a user to change cooking conditions.

### Solution to Problem

In order to solve the problem, a heating cooker according to the present invention comprises:
a heating chamber for heating an object to be heated,
a water heating vessel for producing steam that is supplied into the heating chamber,
a water heater unit for heating water in the water heating vessel,
a heating chamber inside heating unit for increasing a temperature of inside of the heating chamber and heating the steam produced in the water heating vessel into superheated steam such that the heating chamber is supplied with the superheated steam,
a steam detector unit for detecting that there is steam produced in the water heating vessel or not, and
a control unit for controlling the water heater unit and the heating chamber inside heating unit, wherein
in a process in which cooking is performed under a first heating condition under which the superheated steam produced by the heating chamber inside heating unit is supplied to the heating chamber to heat the object to be heated, when the steam detector unit detects that there is no steam produced in the water heating vessel, the control unit ceases power supply to the water heater unit, performs switching to a second heating condition under which cooking is to be performed without supply of steam, and continues the cooking by the heating chamber inside heating unit, without supply of steam.

In the heating cooker with the above configuration, when no steam is produced in the water heating vessel because of absence of water therefrom in a process in which cooking is performed under the first heating condition for heating of the object to be heated with supply to the heating chamber of superheated steam produced by the heating chamber inside heater unit, the steam detection unit detects that there is no stream produced in the water heating vessel. Then, the control unit ceases the power supply to the water heater unit, performs switching to the second heating condition for cooking without supply of steam, and continues cooking by the heating chamber inside heater unit without supply of steam. As for the second heating condition for heat cooking without supply of steam, conditions such as, for instance, inputted power for the heating chamber inside heater unit, remaining cooking time and/or the like, are controlled according to a cooking mode and/or the like, and thus cooking can be continued under an optimal condition without supply of steam and satisfactory cooking can be attained without a user changing cooking conditions even if water is exhausted in middle of cooking.

In one embodiment, the control unit controls the heating chamber inside heating unit so that a temperature in the heating chamber under the second heating condition is made lower than a temperature in the heating chamber under the first heating condition.

Provided that the power supplied to the heating chamber inside heating unit under the second heating condition is as high as that under the first heating condition, decrease in quantity of steam in the heating chamber would cause increase of the temperature in the heating chamber in comparison with that under the first heating condition because power for the heating chamber inside heating unit that was used for increasing temperature of steam produced in the water heating vessel makes surplus power that causes extra heating of inside of the heating chamber.

In view of this, in the above embodiment, the control unit controls the heating chamber inside heater unit so that the temperature in the heating chamber under the second heating condition is made lower than the temperature in the heating chamber under the first heating condition. The increase in the temperature in cooking under the second heating condition after exhaustion of water is thereby suppressed and overheating/overcooking is prevented.

In one embodiment, the control unit controls the heating chamber inside heating unit so that a power supplied to the heating chamber inside heating unit under the second heating condition is made lower than a power supplied under the first heating condition.

In this embodiment, increase in the temperature in the heating chamber can be suppressed under the second heating condition by the control unit controlling the heating chamber inside heating unit to make the power supplied thereto under the second heating condition lower than the power supplied thereto under the first heating condition.

In one embodiment, the control unit makes setting of a cooking time such that the cooking time under the second heating condition is shorter than a cooking time set under the first heating condition.

Provided that the power supplied to the heating chamber inside heating unit under the second heating condition is as high as that under the first heating condition, the temperature in the heating chamber increases in comparison with that under the first heating condition. However, in this embodiment, the control unit makes setting of the cooking time under the second heating condition such that it is shorter than the cooking time which would be set under the first heating condition, so that it is possible to prevent overheating as well as to shorten the cooking time.

In one embodiment, the heating cooker further comprises a water level sensor for detecting a water level in the water heating vessel, and when the water level in the water heating vessel detected by the water level sensor becomes a specified value or lower, the steam detector unit determines that there is no steam produced in the water heating vessel.

In this embodiment, the steam detector unit is capable of detecting exhaustion of steam supply from the water heating vessel in advance, by a determination that there is no steam produced in the water heating vessel when a water level in the water heating vessel detected by the water level sensor becomes a specified value or lower. Controllability for cooking is thereby improved.

In one embodiment, the heating cooker further comprises a water heating vessel temperature sensor for detecting a temperature of the water heating vessel, and when the temperature of the water heating vessel detected by the water heating vessel temperature sensor becomes a specified value or higher, the steam detector unit determines that there is no steam produced in the water heating vessel.

In this configuration, the steam detector unit is capable of detecting whether there is steam produced in the water heating vessel or not, indirectly and easily without use of a complicated water level sensor or the like, by determining that no steam is produced in the water heating vessel when the temperature of the water heating vessel detected by the water heating vessel temperature sensor becomes a specified value or higher values.

In one embodiment, the heating cooker further comprises a steam temperature sensor for detecting a temperature of steam in a steam path extending from the water heating vessel to the heating chamber, and the steam detector unit determines that there is steam produced in the water heating vessel or not, on basis of the temperature of steam in the steam path detected by the steam temperature sensor.

In this configuration, the steam detector unit is capable of directly detecting that there is steam produced or not, by determining whether or not there is steam produced in the water heating vessel on basis of the temperature of steam in the steam path detected by the steam temperature sensor, and is thus capable of reliably detecting stoppage of supply of the steam.

### Advantageous Effects of Invention

As is apparent from the above, the present invention realizes a heating cooker which continues a cooking operation under an optimal condition without supply of steam and thus attains satisfactory cooking without a user changing cooking conditions even if water is exhausted in middle of cooking.

### BRIEF DESCRIPTION OF DRAWINGS

Fig. 1 is a schematic configuration of a heating cooker in accordance with an embodiment of the invention;
Fig. 2 is a control block diagram for the heating cooker;
Fig. 3 is a flow chart illustrating operations of a control unit of the heating cooker during cooking;
Fig. 4 is a flow chart illustrating another example of operations of the control unit of the heating cooker during cooking; and
Fig. 5 is a diagram for illustrating mode discriminant conditions.

### DESCRIPTION OF EMBODIMENTS

Hereinbelow, a heating cooker of the invention will be described in detail by way of examples shown in the drawings.

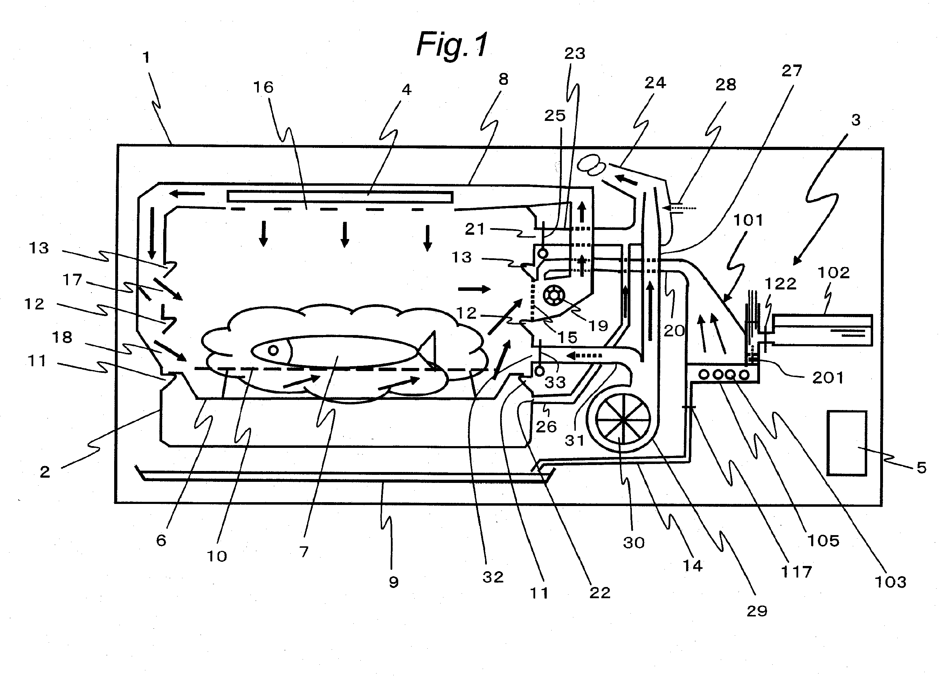

Fig. 1 is a schematic configuration of a heating cooker in accordance with an embodiment of the invention.

The heating cooker has a body casing 1, a heating chamber 2 provided in the body casing 1, a steam producing device 3 for producing steam, a steam heater 4 as an example of a heating chamber inside heating unit for heating steam from the steam producing device 3 to thereby produce superheated steam, and a control unit 5 for controlling operations of the steam producing device 3, the steam heater 4 and the like. Herein, the superheated steam refers to steam heated to a superheated state with a temperature higher than 100°C.

A door (not shown) is pivotably mounted at the front of the body casing 1. The door pivots around an axis near a bottom end thereof.

The heating chamber 2 has an opening that is closed and opened by the door, on a front side thereof. Side surfaces, a bottom surface, and a top surface of the heating chamber 2 are composed of stainless steel plates. Through the opening, a user puts an object 7 to be heated into the heating chamber 2 and takes the object 7 heated out of the heating chamber 2. Heat insulating material (not shown) is provided around the heating chamber 2 so as to attain heat insulation between inside and outside of the heating chamber 2.

In the heating chamber 2, a tray 6 made of stainless steel is placed at a distance from the bottom surface of the heating chamber 2. The tray 6 is supported by lower supports 11 provided on left and right side walls of the heating chamber 2. A grid-like cooking grill 10 formed of stainless steel wires is placed on the tray 6, and the object 7 to be heated is put at center of the cooking grill 10 in general. Thus the object 7 to be heated is accommodated in the heating chamber 2 at a distance from the bottom surface of the heating chamber 2.

Provided on the left and right side walls of the heating chamber 2 are middle supports 12 which are positioned above the lower supports 11 and upper supports 13 which are positioned above the middle supports 12. The tray 6 can be supported on the middle supports 12 or the upper supports 13 as well as on the lower supports 12. Thus the user is capable of changing supports of the tray 6 from the lower supports 11 to the middle supports 12 or the upper supports 13 and thereby changing a vertical position of the object 7 to be heated in the heating chamber 2.

The steam producing device 3 includes a steam producing unit 101 having a water reservoir part 105 as an example of a water heating vessel, a water supply tank 102 containing water that is to be supplied to the water reservoir part 105, and a water heater 103 as an example of a water heater unit that is provided in the water reservoir part 105 and that is for heating and evaporating water stored in the water reservoir part 105. The water heater 103 is a sheath heater wound in shape of a vortex.

The steam producing device 3 has a solenoid valve, so that a passage between the water supply tank 102 and the water reservoir part 105 is opened and closed by a valve element 201 of the solenoid valve.

The solenoid valve has the valve element 201, a shaft (not shown) of which one end is connected to the valve element 201 and which can vertically be moved, and a solenoid type actuating part (not shown) which is connected to the other end of the shaft and which is for vertically actuating the shaft.

The water supply tank 102 is inserted in a water supply tank housing chamber (not shown) provided on a lateral side of the heating chamber 2. A connection part 122 detachably connects the water supply tank 102 to the steam producing unit 101. The water supply tank 102 can be taken out of the body casing 1 through the front side.

A drain valve 117 is mounted on a bottom part of the steam producing unit 101, and one end of a drain path 14 is connected to the drain valve 117. The other end of the drain path 14 is positioned over a drip pan 9. The drip pan 9 is detachable from the body casing 1 and can be taken out of the body casing 1 through the front side.

A circulation air suction port 15 is provided between the upper support 13 and the middle support 12 on one of the side surfaces of the heating chamber 2. First spouts 16 are provided on the top surface of the heating chamber 2 so as to face the steam heater 4. Second and third spouts 17 and 18 are provided on the other side surface of the heating chamber 2. The second spout 17 is positioned between the upper support 13 and the middle support 12. The third spout 18 is positioned between the middle support 12 and the lower support 11. A space in the heating chamber 2 and a space in a circulation path 8 communicate with each other through the circulation air suction port 15, the first spouts 16, the second spout 17, and the third spout 18.

The circulation path 8 is provided outside the heating chamber 2. One end of the circulation path 8 is connected to the circulation air suction port 15, and the other end thereof is connected to the second spout 17 and the third spout 18. A circulation fan 19 and the steam heater 4 are provided in the circulation path 8, and a position of the steam heater 4 is on downstream side of a position of the circulation fan 19. That is, the circulation fan 19 sucks steam in the heating chamber 2 through the circulation air suction port 15 and blows the steam toward the steam heater 4. The steam heated by the steam heater 4 spouts into the heating chamber 2 from the first spouts 16 on the top surface of the heating chamber 2 and from the second and third spouts 17 and 18 on the side surface of the heating chamber 2 on the other side.

A part of the circulation path 8 in vicinity of the circulation air suction port 15 is connected to the steam producing unit 101 through a steam discharge path 20 as an example of a steam passage. Thus steam produced in the steam producing unit 101 flows through the steam discharge path 20, then comes into the circulation path 8, joins steam sucked through the circulation air suction port 15, and flows toward the steam heater 4.

Surplus steam in the heating chamber 2 flows out of the heating chamber 2 through first and second exhaust ports 21 and 22. One end of an exhaust path 23 is connected to the first exhaust port 21. The other end part of the exhaust path 23 forms an ejector 24. The first exhaust port 21 can be opened and closed by an exhaust damper 25. One end of an exhaust tube 26 is connected to the second exhaust port 22. The other end of the exhaust tube 26 is connected to the exhaust path 23, so that steam in the exhaust tube 26 merges with steam in the exhaust path 23 and is discharged out of the body casing 1 through the ejector 24. On this occasion, the steam flowing from the ejector 24 toward outside of the body casing 1 is mixed and diluted with air from a dilution air path 27 and a suction duct 28.

One end of the dilution air path 27 is inserted into the ejector 24, and the other end thereof is connected to a fan casing 29. Air is delivered from an exhaust dilution fan 30 in the fan casing 29 to the ejector 24. The fan casing 29 is connected through an air supply path 31 to an air supply port 32. The air supply port 32 is provided with an air supply damper 33 so that the air supply port 32 can be opened and closed by the air supply damper 33.

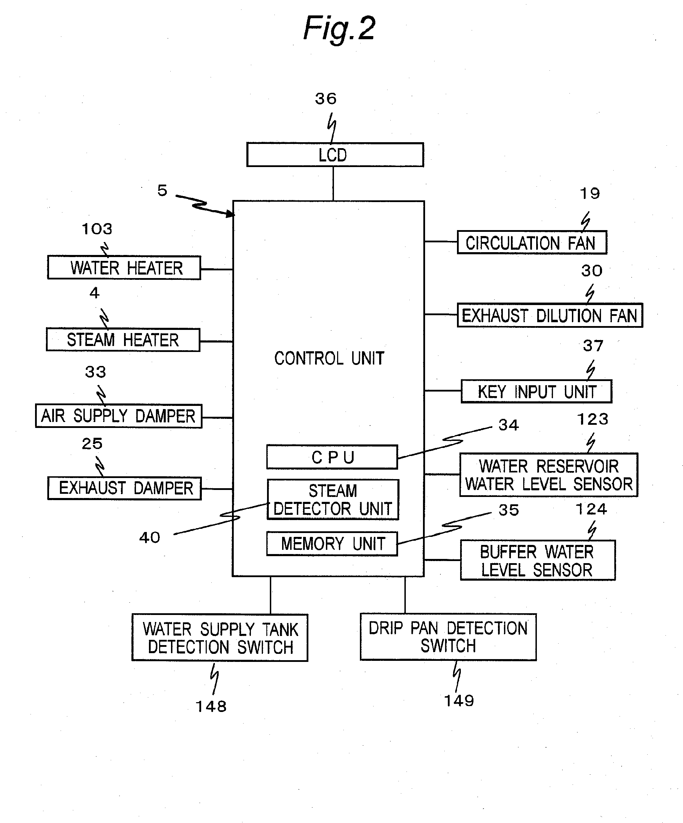

Fig. 2 is a control block diagram for the heating cooker.

The control unit 5 includes a CPU (central processing unit) 34, a memory unit 35, a steam detector unit 40, an input/output circuit and the like. The CPU 34 fetches and executes instructions stored in the memory unit 35, and performs operations, such as binary add, logical operation, increment and decrement, and/or comparison, upon data inputted through input equipment of various types.

Connected to the control unit 5 are the steam heater 4, the circulation fan 19, the exhaust damper 25, the air supply damper 33, the exhaust dilution fan 30, a liquid crystal display unit 36, a key input unit 37, the water heater 103, a water reservoir water level sensor 123, a buffer water level sensor 124, a water supply tank detection switch 148, and a drip pan detection switch 149. The liquid crystal display unit 36 and the key input unit 37 are provided on one side of the door that opens and closes the opening of the heating chamber 2.

Programs for controlling the steam heater 4, the circulation fan 19, the exhaust damper 25, the air supply damper 33, the exhaust dilution fan 30, and the like are stored in the memory unit 35. Information obtained from the water reservoir water level sensor 123, the buffer water level sensor 124, the water supply tank detection switch 148, the drip pan detection switch 149 and the like is stored in the memory unit 35.

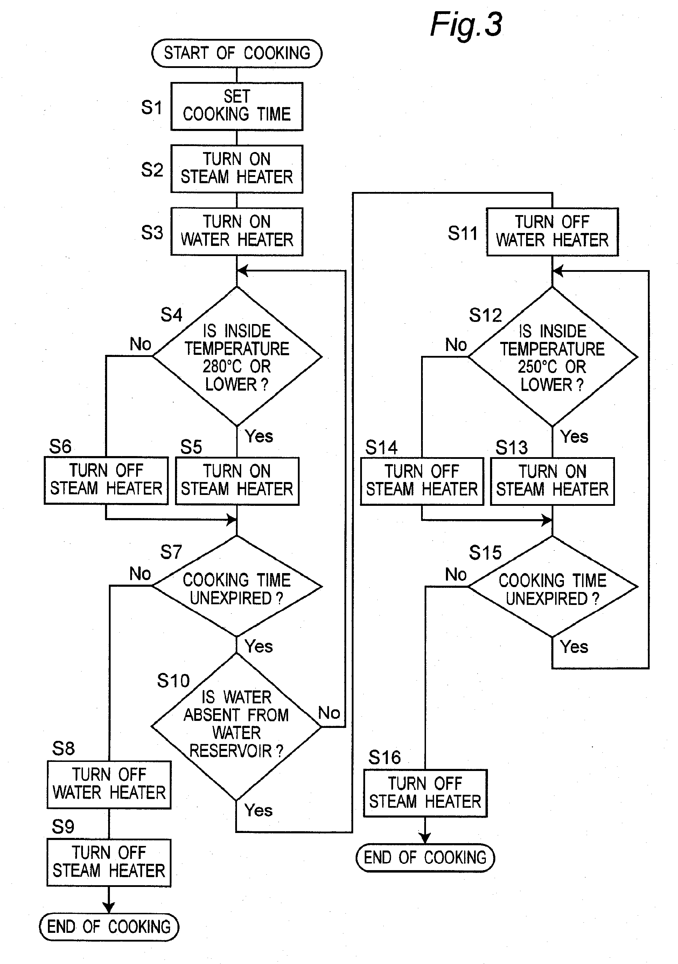

Hereinbelow, operations of the control unit 5 of the heating cooker during cooking will be described with reference to a flow chart shown in Fig. 3. Herein, an inside temperature (i.e., temperature in the heating chamber 2) is set at 280°C (step S4) as a first heating condition, and the inside temperature is set at 250°C (step S12) as a second heating condition after exhaustion of water.

Once cooking is started, cooking time is initially set at step S1.

Subsequently, the flow goes to step S2 at which the steam heater 4 is turned on, and then the flow goes to step S3 at which the water heater 103 is turned on.

Subsequently, the flow goes to step S4 at which it is determined whether or not the inside temperature (i.e., temperature in the heating chamber 2) is equal to or lower than 280°C and, if equal to or lower than 280°C, the flow goes to step S5 and the steam heater 4 is turned on. If the inside temperature is determined to exceed 280°C in the step S4, the flow goes to step S6 and the steam heater 4 is turned off.

Subsequently, the flow goes to step S7 at which it is determined whether the cooking time is unexpired or not and, if expired, the flow goes to step S8 at which the water heater 103 is turned off, and then at step S9 the steam heater 4 is turned off so that the cooking is ended.

If the cooking time is determined to be unexpired in the step S7, the flow goes to step S10 at which it is determined whether or not water is absent from inside of the water reservoir part 105 and, if water is absent from the water reservoir part 105, the flow goes to a step S11, and if water is present in the water reservoir part 105, the flow returns to the step S4 and the steps S4 through S10 are repeated.

With the water heater 103 turned off at the step S11, the flow goes to step S12 at which it is determined whether or not the inside temperature is equal to or lower than 250°C and, if equal to or lower than 250°C, the flows goes to step S13 at which the steam heater 4 is turned on. If the inside temperature exceeds 250°C at the step S12, the flow goes to step S14 and the steam heater 4 is turned off.

Subsequently, the flow goes to step S15 at which it is determined whether the cooking time is unexpired or not and, if expired, the steam heater 4 is turned off so that the cooking is ended, with advance to a step S16.

If the cooking time is unexpired in the step S15, the flow returns to the step S12 and the steps S12 through S15 are repeated.

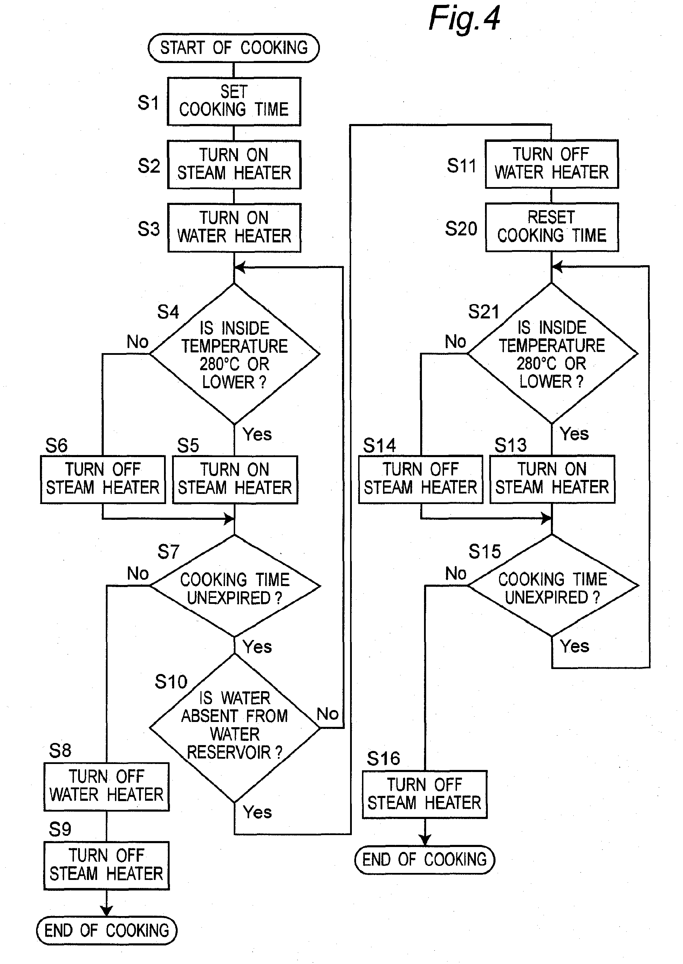

Fig. 4 shows a flow chart of another example of operations of the control unit 5 of the heating cooker during cooking, and the operations are different from the operations of the flow chart of Fig. 3 in that step S20 is added and in that the step S12 of Fig. 3 is modified into step S21. Herein, the inside temperature (i.e., temperature in the heating chamber 2) as the first heating condition is set at 280°C (step S4), and the inside temperature as the second heating condition after exhaustion of water is set at 280°C (step S21).

When water is absent in the water reservoir part 105, in the operations of the control unit 5 during cooking in the flow chart shown in Fig. 4, remaining cooking time is reset in accordance with a cooking mode and/or the like on basis of cooking time determined at step S1.

Hereinbelow will be described a specific example of setting of the first heating condition and the second heating condition.

For instance, a cooking mode is selected according to types of foods, a cooking method and/or the like, the temperature in the heating chamber 2 is set at 260°C as the first heating condition with a power supplied to the steam heater 4 set at 600 W and with a power supplied to the water heater 103 set at 300 W, and cooking time is initially determined according to the cooking mode.

When the steam detector unit 40 detects that no steam is produced in the steam producing device 3, in middle of the cooking under the first heating condition, the water heater 103 is turned off and the second heating condition is set in any of first through third modes below in accordance with the cooking mode.

(First mode) The temperature in the heating chamber 2 is retained at 260°C with the power supplied to the steam heater 4 set at 540 W, and remaining cooking time is retained.

(Second mode) The temperature in the heating chamber 2 is set at 287°C with the power supplied to the steam heater 4 retained at 600 W, and remaining cooking time is decreased by 10%.

(third mode) The temperature in the heating chamber 2 is set at 240°C with the power supplied to the steam heater 4 set at 495 W, and remaining cooking time is increased by 10%.

On condition that the cooking mode that has been set is for a food that conducts heat well to inside thereof, cooking time can be reduced by selection of the second mode because a portion (about 60W in the embodiment) of the power for the steam heater 4 that was used for increasing temperature of steam under the first heating condition can be allocated for heating inside of the heating chamber 2.

On condition that the cooking mode that has been set is for a food that hardly conducts heat to inside thereof, on the other hand, the food can sufficiently be heated to inside thereof and finishing in cooking can be improved by selection of the third mode that provides slow heating, with the power to be supplied to the steam heater 4 reduced to 495 W, with the temperature in the heating chamber 2 decreased by 20°C, and with the cooking time increased by 10% in comparison with the first heating condition.

On condition that the cooking mode that has been set is for an intermediate food that comes under neither of the above foods, the first mode is selected so that cooking is carried out, for cooking time originally determined, with the power to be supplied to the steam heater 4 set at 540 W by deduction of the portion (about 60W in the embodiment) of the power for the steam heater 4 that was used for increasing the temperature of steam under the first heating condition and with setting of the temperature in the heating chamber 2 retained at 260°C.

Though the second heating condition (the first through third modes) is selected according to a cooking mode in the embodiment, the second heating condition (the first through third modes) may be selected according to a characteristic of rising of the temperature in the heating chamber 2 under the first heating condition.

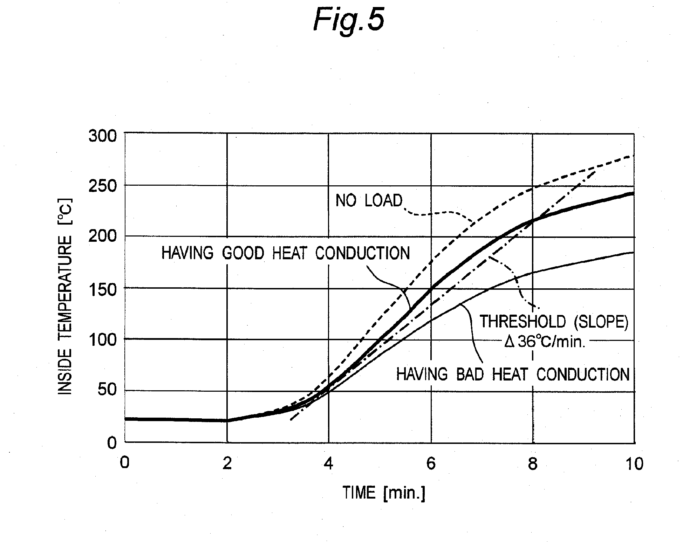

Specifically, as shown in Fig. 5, characteristics of rising of the temperature in the heating chamber 2 are utilized that are used for determination of heat conduction in a food. In Fig. 5, the horizontal axis represents time [min.] from start of cooking, and the vertical axis represents inside temperatures (temperatures in the heating chamber 2) [°C]. In Fig. 5, a thin solid line shows a characteristic of temperature rising when there is an object to be heated that does not conduct heat well (that is, having a bad heat conduction), a thick solid line shows a characteristic of temperature rising when there is an object to be heated that conducts heat well (that is, having a good heat conduction), and a dotted line shows a characteristic of temperature rising in absence of an object to be heated.

Herein, a straight chain line with a slope of Δ36°C/min. is used as a threshold to select the second heating condition (the first through third modes), the slope being a slope between the thin solid line showing the characteristic of temperature rising for the object to be heated that does not conduct heat well and the thick solid line showing the characteristic of temperature rising for the object to be heated that conducts heat well, is thereby selected.

When the steam detector unit 40 detects that no steam is produced in the water reservoir part 105 because of absence of water therefrom, in a process in which heat cooking is performed under the first heating condition for heating of the object to be heated with supply of superheated steam produced by the steam heater 4 to the heating chamber 2, in the heating cooker having an above configuration, the control unit 5 ceases the power supply to the water heater 103, performs switching to the second heating condition for cooking without supply of steam, and continues cooking by the steam heater 4 without supply of steam. As for the second heating condition for heat cooking without supply of steam, conditions such as, for instance, inputted power for the steam heater 4, remaining cooking time and/or the like, are controlled according to a cooking mode and/or the like, and thus cooking can be continued under an optimal condition without supply of steam and satisfactory cooking can be attained without a user changing cooking conditions even if water is exhausted in middle of cooking.

The control unit 5 may control the steam heater 4 so that the temperature in the heating chamber 2 under the second heating condition is made lower than the temperature in the heating chamber 2 under the first heating condition, and thus overheating/overcooking can be prevented by suppression of increase in the temperature in cooking under the second heating condition after exhaustion of water.

The control unit 5 may control the steam heater 4 so that the power supplied to the steam heater 4 under the second heating condition is made lower than the power supplied thereto under the first heating condition, and thus increase in the temperature in the heating chamber 2 under the second heating condition can be suppressed.

Provided that the power supplied to the steam heater 4 under the second heating condition is as high as that under the first heating condition, the temperature in the heating chamber 2 increases in comparison with that under the first heating condition. However, the control unit 5 may make setting of the cooking time under the second heating condition such that it is shorter than the cooking time which would be set under the first heating condition, whereby it is possible to prevent overheating. Thus, prevention of overheating/overcooking and shortening of the cooking time are achieved.

The steam detector unit 40 is capable of detecting exhaustion of steam supply from the water reservoir part 105 in advance, by a determination that no steam is produced in the water reservoir part 105 when a water level in the water reservoir part 105 detected by the water reservoir water level sensor 123 becomes a specified quantity or lower values, and controllability for cooking is thereby improved.

There may be provided a water heating vessel temperature sensor for detecting a temperature of the water reservoir part 105. In this configuration, the steam detector unit 40 is capable of detecting whether steam is produced or not in the water reservoir part 105, indirectly and easily without use of a complicated water level sensor or the like, by determining that no steam is produced in the water reservoir part 105 when the temperature of the water reservoir part 105 detected by the water heating vessel temperature sensor becomes a specified value or higher values.

There may be provided a steam temperature sensor for detecting a temperature of steam in the steam discharge path 20 extending from the water reservoir part 105 to the heating chamber 2. In this configuration, the steam detector unit 40 is capable of directly detecting that there is steam produced or not, by determining whether steam is being produced in the water reservoir part 105 or not on basis of the temperature of steam in the steam path detected by the steam temperature sensor, and is thus capable of reliably detecting stoppage of the steam supply.

In the embodiment, a magnetron for producing microwaves, a waveguide for guiding the microwaves from the magnetron into the heating chamber 2, and a rotating antenna for stirring the microwaves guided by the waveguide may be provided under the heating chamber 2. The microwaves emitted from the magnetron are cast through the waveguide and the rotating antenna onto the object to be heated 7 in the heating chamber 2. The microwaves are stirred by the rotating antenna and are cast onto the object to be heated 7. The rotating antenna is driven by rotation drive means. In such a configuration, cooking with use of the microwaves can be carried out as cooking without use of steam.

Embodiments of the invention being thus described, it will be obvious that the invention is not limited to the embodiments described above and can be implemented with modification in various ways within the scope of the invention.

### REFERENCE SIGNS LIST

1 body casing
2 heating chamber
3 steam producing device
4 steam heater
5 control unit
6 tray
7 object to be heated
8 circulation path
9 drip pan
10 cooking grill
11 lower support
12 middle support
13 upper support
14 drain path
15 circulation air suction port
16 first spout
17 second spout
18 third spout
19 circulation fan
20 steam discharge path
21, 22 first, second exhaust ports
23 exhaust path
24 ejector
25 exhaust damper
26 exhaust tube
27 dilution air path
28 suction duct
29 fan casing
30 exhaust dilution fan
31 air supply path
32 air supply port
33 air supply damper
34 CPU
35 memory unit
36 liquid crystal display unit
40 steam detector unit
101 steam producing unit
102 water supply tank
103 water heater
105 water reservoir part
117 drain valve
122 connection part
123 water reservoir water level sensor
124 buffer water level sensor
148 water supply tank detection switch
149 drip pan detection switch
201 valve element

## Claims

1. A heating cooker comprising:
a heating chamber for heating an object to be heated,
a water heating vessel for producing steam that is supplied into the heating chamber,
a water heater unit for heating water in the water heating vessel,
a heating chamber inside heating unit for increasing a temperature of inside of the heating chamber and heating the steam produced in the water heating vessel into superheated steam such that the heating chamber is supplied with the superheated steam,
a steam detector unit for detecting that there is steam produced in the water heating vessel or not, and
a control unit for controlling the water heater unit and the heating chamber inside heating unit, wherein
in a process in which cooking is performed under a first heating condition under which the superheated steam produced by the heating chamber inside heating unit is supplied to the heating chamber to heat the object to be heated, when the steam detector unit detects that there is no steam produced in the water heating vessel, the control unit ceases power supply to the water heater unit, performs switching to a second heating condition under which cooking is to be performed without supply of steam, and continues the cooking by the heating chamber inside heating unit, without supply of steam.

2. The heating cooker as claimed in Claim 1, wherein
the control unit controls the heating chamber inside heating unit so that a temperature in the heating chamber under the second heating condition is made lower than a temperature in the heating chamber under the first heating condition.

3. The heating cooker as claimed in Claim 1, wherein
the control unit controls the heating chamber inside heating unit so that a power supplied to the heating chamber inside heating unit under the second heating condition is made lower than a power supplied under the first heating condition.

4. The heating cooker as claimed in Claim 1, wherein
the control unit makes setting of a cooking time such that the cooking time under the second heating condition is shorter than a cooking time set under the first heating condition.

5. The heating cooker as claimed in any one of Claims 1 through 4, further comprising:
a water level sensor for detecting a water level in the water heating vessel, wherein
when the water level in the water heating vessel detected by the water level sensor becomes a specified value or lower, the steam detector unit determines that there is no steam produced in the water heating vessel.

6. The heating cooker as claimed in any one of Claims 1 through 4, further comprising:
a water heating vessel temperature sensor for detecting a temperature of the water heating vessel, wherein
when the temperature of the water heating vessel detected by the water heating vessel temperature sensor becomes a specified value or higher, the steam detector unit determines that there is no steam produced in the water heating vessel.

7. The heating cooker as claimed in any one of Claims 1 through 4, further comprising:
a steam temperature sensor for detecting a temperature of steam in a steam path extending from the water heating vessel to the heating chamber, wherein
the steam detector unit determines that there is steam produced in the water heating vessel or not, on basis of the temperature of steam in the steam path detected by the steam temperature sensor.
